# EUROPÄISCHE PATENTSCHRIFT

(11) **EP 3 705 006 B1**
(45) Veröffentlichungstag und Bekanntmachung des Hinweises auf die Patenterteilung: **16.08.2023**
(21) Anmeldenummer: 19160780.3
(22) Anmeldetag: 05.03.2019
(51) Int. Cl.: A47J 43/07

(54) **KÜCHENMASCHINE MIT ÜBERWACHUNGSEINRICHTUNG**
FOOD PROCESSOR WITH MONITORING DEVICE
ROBOT DE CUISINE AVEC DISPOSITIF DE SURVEILLANCE

(43) Veröffentlichungstag der Anmeldung: 09.09.2020
(60) Teilanmeldung: 23185046.2
(73) Patentinhaber: Vorwerk & Co. Interholding GmbH, 42270 Wuppertal (DE)
(72) Erfinder: Tepel, Dr., Phillipp, 42287 Wuppertal (DE); Pieper, Dr., Mirco, 42287 Wuppertal (DE); Kraut-Reinkober, Stefan, 51375 Leverkusen (DE)
(74) Vertreter: Gille Hrabal Partnerschaftsgesellschaft mbB Patentanwälte

(56) Entgegenhaltungen:
- EP-A1- 2 989 940
- DE-A1-102010 037 769
- DE-A1-102016 110 687

## Beschreibung

Die Erfindung betrifft eine Küchenmaschine zum Durchführen eines Speisenzubereitungsvorgangs durch Erhitzen, Zerkleinern und/oder Mischen einer Speise in einem Speisenzubereitungsgefäß. Die Küchenmaschine umfasst einen Sensor zum Messen eines Zustands der Küchenmaschine oder einer Speise in dem Speisenzubereitungsgefäß sowie eine Überwachungseinrichtung zum Überwachen des gemessenen Zustands. Die Überwachungseinrichtung ist so konfiguriert, dass die Überwachungseinrichtung auf Basis des gemessenen Zustands ein Überwachungsergebnis ermittelt und in Abhängigkeit von dem Überwachungsergebnis eine Aktion initiiert.

Küchenmaschinen, die gespeicherte Rezepte bereitstellen und ein teilautomatisiertes Durchführen von mehreren Schritten eines Rezeptes unterstützen, werden häufig mit einer sogenannten "Geling-Garantie" angeboten. Der Benutzer erwartet hierbei ein stets hoch qualitatives Kochergebnis, wenn eine Speise mithilfe einer solchen Küchenmaschine zubereitet wird. Die Druckschriften DE 10 2010 037 769 A1 und EP 2 989 940 A1 offenbaren Beispiele für solche Küchenmaschinen.

Die Druckschrift EP 1 581 059 A1 offenbart ein Gerät zum Garen, das durch einen Cluster-Vergleich eines Garprozess-1st-Ablaufs mit mehreren repräsentativen Garprofilen ein repräsentatives Garprofil zugeordnet und dieses repräsentative Garprofil zum Führen des Garprozesses verwendet. Eine automatische Produkterkennung und Garprozessführung wird hierdurch bezweckt. Rezepte sind bei diesem Gerät nicht hinterlegt, und es werden keine teilautomatisierten Rezeptschritte Die Druckschrift DE 10 2016 110687 A1 offenbart durch das Gargerät durchgeführt. eine Küchenmaschine gemäss Oberbegriff des Anspruchs 1.

Es ist Aufgabe der Erfindung, eine Küchenmaschine bereitzustellen, die ein reproduzierbares Kochergebnis mit hoher Qualität mit besonders großer Zuverlässigkeit ermöglich.

Zur Lösung der Aufgabe dienen eine Küchenmaschine gemäß dem Hauptanspruch sowie ein Verfahren gemäß dem Nebenanspruch. Vorteilhafte Ausführungsformen ergeben sich aus den Unteransprüchen.

Die Aufgabe wird gelöst durch eine Küchenmaschine zum Durchführen eines Speisenzubereitungsvorgangs durch Erhitzen, Zerkleinern und/oder Mischen einer Speise in einem Speisenzubereitungsgefäß. Die Küchenmaschine umfasst einen Sensor zum Messen eines Zustands der Küchenmaschine oder einer Speise in dem Speisenzubereitungsgefäß. Die Küchenmaschine umfasst ferner eine Überwachungseinrichtung zum Überwachen des gemessenen Zustands. Die Überwachungseinrichtung ist so konfiguriert, dass die Überwachungseinrichtung auf Basis des gemessenen Zustands ein Überwachungsergebnis ermittelt und in Abhängigkeit von dem Überwachungsergebnis eine Aktion initiiert.

Die Überwachungseinrichtung ist so konfiguriert, dass die Überwachung in Abhängigkeit von einem Rezept zur Zubereitung einer Speise erfolgt. Dadurch kann ein reproduzierbares Kochergebnis verbessert sichergestellt und ein Kochergebnis mit hoher Qualität besonders zuverlässig erreicht werden.

Mit Rezept ist ein elektronisch gespeichertes Rezept gemeint. Das Rezept enthält Informationen, die dem Benutzer als Hinweis angezeigt werden und/oder die die Küchenmaschine steuern. Z.B. werden ein Heizelement oder ein Mix-Werkzeug durch ein oder mehrere Informationen des Rezeptes gesteuert. Gemäß einem Rezept werden eine Speise aus Zutaten hergestellt. Ein solches Rezept kann in einzelne Schritte unterteilt sein, die nacheinander durchzuführen sind, um die Speise zu erhalten. Ein Hinzufügen einer Zutat in das Speisenzubereitungsgefäß kann ein erster Schritt sein. Ein Zerkleinern einer Zutat in dem Speisenzubereitungsgefäß kann ein zweiter Schritt sein. Ein anschließendes Erhitzen der zerkleinerten Zutat kann ein dritter Schritt sein. Solche Schritte werden nachfolgend Rezeptschritte genannt. Eine Speise kann fest, viskos oder flüssig sein. Eine Speise kann ein Getränk, eine Zutat oder ein Zutatengemisch sein.

Erfindungsgemäß ist die Überwachungseinrichtung so konfiguriert, dass eine Vielzahl von Kennwerten zur Charakterisierung des Zustands auf Basis der Messung des Sensors berechnet wird. Der gemessene Zustand kann mithilfe der Vielzahl von Kennwerten mit sehr hoher Genauigkeit überwacht und auf diese Weise ein gutes Kochergebnis verbessert sichergestellt werden. Die Überwachungseinrichtung ermittelt das Überwachungsergebnis auf Basis der berechneten Kennwerte. Die Genauigkeit des Überwachungsergebnisses kann so verbessert werden, um so besonders zuverlässig ein Kochergebnis mit hoher Qualität zu erreichen. In einer Ausgestaltung sind mindestens 2 und/oder höchstens 40 Kennwerte vorgesehen, vorzugsweise pro Rezept oder pro Rezeptschritt, um ein Kochergebnis mit hoher Qualität zu erzielen. Ein Kennwert ist ein Zahlenwert, der durch eine spezielle Berechnung erhalten wird, die für jeden der Kennwerte der Vielzahl der Kennwerte unterschiedlich ist. Jeder der Kennwerte beschreibt daher ein anderes Charakterisierungsmerkmal des Zustands.

Ein Sensor misst einen Messwert, aus dem mittels einer festgelegten mathematischen Formel eine Messgröße bestimmt werden kann. Eine Messgröße beschreibt eine bestimmte Eigenschaft des Zustands der Küchenmaschine oder der Speise in dem Speisenzubereitungsgefäß. Ein Sensor misst also Messwerte auf unmittelbare Weise und eine Messgröße auf mittelbare Weise. Der gemessene Zustand bezieht sich auf den Zustand der Küchenmaschine oder der Speise in dem Speisenzubereitungsgefäß, von dem zumindest eine Eigenschaft durch den Sensor gemessen wird.

Bevorzugt ist die Messgröße eine Temperatur des Speisenzubereitungsgefäßes, eine Temperatur einer Speise in dem Speisenzubereitungsgefäß, ein Gewicht, eine Heizleistung für ein Heizelement zum Erhitzen oder ein Motorstrom zum Antreiben eines Mix-Werkzeugs zum Zerkleinern und/oder Mischen. Aus den Messwerten nur einer einzigen Messgröße können eine Vielzahl von unterschiedlichen Kennwerten berechnet werden. Die unterschiedlichen Kennwerte werden jeweils durch verschiedene mathematische Operationen berechnen, wie zum Beispiel das Bilden eines Integrals, einer Ableitung (Differentialquotient), eines Median oder eines Mittelwerts, bevorzugt eines MADs (engl. mean absolute deviation), einer Fast-FourierTransformation oder einer Hilbert-Transformation. Auch Interpolation, Extrapolation, Standardabweichung, Varianz, Minimum oder Maximum sind grundsätzlich möglich. Es hat sich gezeigt, dass durch eine Überwachung, die mithilfe von solchen Kennwerten durchgeführt wird, weiter verbessert ein sehr gutes Kochergebnis erzielt werden kann.

In einer Ausführungsform ist für jedes Rezept ein eigenes Soll-Profil vorgesehen, auf das die Überwachungseinrichtung zum Überwachen des Zustands zugreifen kann. Durch die Überwachung mittels rezeptabhängiger Soll-Profile wird die Genauigkeit des Überwachungsergebnisses und damit die Reproduzierbarkeit und Qualität der Speise erhöht. Wenn ein Rezept mehrere Rezeptschritte umfasst, ist für jeden Rezeptschritt eines Rezeptes vorzugsweise ein eigenes Soll-Profil vorgesehen. Grundsätzlich ist bei dieser Ausgestaltung nur ein Soll-Profil pro Rezeptschritt vorgesehen. Insbesondere kann die Überwachungseinrichtung auf Soll-Profile zugreifen, die in der Überwachungseinrichtung selbst gespeichert sind und/oder die über eine Datenschnittstelle erhalten oder genutzt werden können.

In einer Ausführungsform umfasst die Küchenmaschine eine Steuerungseinheit, die so konfiguriert ist, dass die Steuerungseinheit auf eine Vielzahl von Rezepten zugreifen kann. Insbesondere kann die Steuerungseinheit auf die Rezepte zugreifen, die in der Steuerungseinheit selbst und/oder die extern, also räumlich getrennt von der Küchenmaschine, in einer Datenbank gespeichert sind. Auf extern gespeicherte Rezepte kann die Steuerungseinheit über eine Datenschnittstelle zugreifen, um diese benutzen zu können.

Gemäss der Erfindung beinhaltet das Rezept eine Vielzahl von Rezeptschritten. Die Aufteilung eines Rezepts in Rezeptschritte vereinfacht eine präzise Umsetzung des Rezepts durch den Benutzer mithilfe der Küchenmaschine. Insbesondere gibt es Rezeptschritte, die die Steuerungseinheit dazu veranlassen, dem Benutzer einen Hinweis über ein Display der Küchenmaschine anzuzeigen, z.B., dass der Benutzer eine Zutat dem Speisenzubereitungsgefäß zuführen soll. Vorzugsweise gibt es Rezeptschritte, die die Steuerungseinheit dazu veranlassen, ein Heizelement und ein Mix-Werkzeug anzusteuern. Insbesondere löst eine Betätigung einer Benutzerschnittstelle durch den Benutzer das Ansteuern der Küchenmaschine zur Durchführung eines Rezeptschrittes aus.

Gemäss der Erfindung kann die Steuerungseinheit auf Basis des Rezepts oder der Rezeptschritte des Rezeptes den Speisenzubereitungsvorgang für die Speise zumindest teilweise automatisiert steuern. Durch die Teilautomatisierung kann die Reproduzierbarkeit des Kochergebnisses erhöht werden.

Teilautomatisiert meint, dass Teile eines Bedienschrittes eines Benutzers zum Durchführen eines Rezeptes oder Rezeptschrittes automatisiert sind. Beispielsweise wird dem Benutzer zum Abwiegen einer Zutat oder zum Einstellen einer Ziel-Temperatur oder Drehzahl des Mix-Werkzeugs bereits die Zielgröße gemäß dem Rezept oder Rezeptschritt angezeigt. In einem anderen Beispiel wird durch Aktivieren des Mix-Werkzeugs gleichzeitig durch die Steuerungseinheit die Ziel-Temperatur automatisch eingestellt.

In einer Ausführungsform ist für jeden Rezeptschritt des Rezeptes ein eigenes Soll-Profil vorgesehen, auf das die Überwachungseinrichtung zum Überwachen des Zustands zugreifen kann. Eine verbesserte Genauigkeit der Überwachung bei den einzelnen Rezeptschritten und damit ein verbessertes Kochergebnis können so ermöglicht werden. Zudem können entsprechend dem spezifischen Vorgang eines Rezeptschrittes jeweils optimale Messgrößen und Berechnungsformeln zum Berechnen der Kennwerte aus den Messwerten der jeweiligen Messgrößen zur Charakterisierung des spezifischen Vorgangs definiert und für die Überwachung genutzt werden. Bei einem Rezeptschritt mit einem Zerkleinerungsvorgang können beispielsweise Kennwerte aus dem Motorstrom für das Mix-Werkzeug definiert und berechnet werden, wenn der mechanische Widerstand der Speise während des Zerkleinerns besonders aussagekräftig ist.

In einer Ausführungsform ist das Soll-Profil ein Gleichungssystem oder ein Algorithmus. Dies erlaubt ein Überwachen mit besonders geringem Rechenaufwand und gleichzeitig ein besonders präzises Überwachungsergebnis, um ein sehr gutes Kochergebnis zu gewährleisten. Bevorzugt kann ein Lernalgorithmus eingesetzt werden. Insbesondere ist das Soll-Profil ein lernendes Regelwerk.

In einer Ausgestaltung wird das Soll-Profil für ein Rezept oder einen Rezeptschritt generiert, indem in einer Trainingsphase eine Reihe von Speisenzubereitungsvorgängen des Rezepts oder des Rezeptschritts durchgeführt werden. Dabei werden eine Vielzahl von Kennwerten aus Messwerten berechnet, wobei Einflussgrößen in einem Rahmen variiert werden, der immer noch ein reproduzierbares und qualitativ hochwertiges Kochergebnis zulässt. Dem Gleichungssystem oder dem Algorithmus kann ein Überwachungsergebnis vorgegeben sein, so zum Beispiel als Prozentwert wie zum Beispiel 100%. Zu den Einflussgrößen und deren Abweichungen gehören die Beschaffenheit der Zutaten, z.B. weiche oder harte Kartoffeln, sowie geringfügige Abweichungen vom Rezept oder Rezeptschritten. Z.B. können Pastinaken statt Möhren im Rahmen einer Variation verwendet werden.

In einer ergänzenden Ausgestaltung wird das Soll-Profil für ein Rezept oder einen Rezeptschritt generiert, indem in der Trainingsphase eine Reihe von Speisenzubereitungsvorgängen des Rezepts oder des Rezeptschritts durchgeführt und dabei die Vielzahl der Kennwerte aus der Messung berechnet werden, wobei Einflussgrößen in einem Rahmen variiert werden, die zu einem unerwünschten Kochergebnis führen, wobei dem Gleichungssystem oder Algorithmus das entsprechende Überwachungsergebnis vorgegeben sein kann, z.B. 0%. Zu den Einflussgrößen und deren Abweichungen gehören die Beschaffenheit der Zutaten, z.B. verfaulte Tomaten statt frische Tomaten, sowie unzulässige Abweichungen vom Rezept oder Rezeptschritt, z.B. Kopfsalat statt Kartoffeln oder Essig, Öl oder Sojasoße statt Wasser.

Grundsätzlich ist es in einer Ausgestaltung möglich, die Trainingsphase zumindest teilweise in die Anwendungsphase beim Endverbraucher auszudehnen, um das Soll-Profil an die Eigenheiten des Endverbrauchers anzupassen. Dadurch wird weiter verbessert ein sehr gutes Kochergebnis sichergestellt. Durch die Trainingsphase werden Gewichtungsfaktoren des Soll-Profils bestimmt und auf diese Weise das Verhalten einer Küchenmaschine oder einer Speise in dem Speisenzubereitungsgefäß während eines Speisenzubereitungsvorgangs in dem Gleichungssystem oder Algorithmus abgebildet. Das auf diese Weise generierte Soll-Profil ermöglicht es, durch Eingabe der Vielzahl der Kennwerte ein Überwachungsergebnis zu erhalten.

In einer Ausführungsform umfasst das Gleichungssystem oder der Algorithmus Gewichtungsfaktoren, die für das jeweilige Rezept oder den jeweiligen Rezeptschritt festgelegt wurden, um ein rezeptabhängiges oder rezeptschrittabhängiges Soll-Profil bereitzustellen. Dies ermöglicht das Abbilden des Modell-Systemverhaltens eines Speisenzubereitungsvorgangs mit einem reproduzierbaren und qualitativ hochwertigen Kochergebnis in dem Gleichungssystem oder dem Algorithmus. Ein Abweichen des Kochvorgangs beispielsweise durch eine übermäßig veränderte Beschaffenheit einer Zutat oder einer falschen Zutat kann auf diese Weise durch das Überwachungsergebnis quantifiziert werden, insbesondere in Form einer Ähnlichkeit mit einem Wert zwischen 0 und 1, insbesondere als Prozentzahl.

Durch das Festlegen der Gewichtungsfaktoren, insbesondere in einer Trainingsphase, für jeden Rezeptschritt kann der Speisenzubereitungsvorgang besonders präzise in dem Gleichungssystem oder dem Algorithmus abgebildet werden.

In einer Ausführungsform ist in einem Soll-Profil jedem Kennwert ein Gewichtungsfaktor zum Gewichten des Kennwerts zugeordnet. Da jedes Rezept bzw. jeder Rezeptschritt unterschiedliche Zustandseigenschaften und Zustandsänderungen aufweist, können durch Gewichtungsfaktoren, die jedem Kennwert zugeordnet sind, der gewünschte Kochverlauf besonders präzise und zuverlässig in dem Gleichungssystem oder dem Algorithmus abgebildet werden. Durch den gewichteten Kennwert und dessen Charakteristik ist eine besonders zuverlässige Wiedererkennung des gewünschten Zustands sowie eine Erkennung einer Abweichung davon während der Durchführung eines Speisenzubereitungsvorgang möglich. Gleichzeitig kann durch das Festlegen der Gewichtungsfaktoren ein besonders effizientes Gleichungssystem bzw. ein besonders effizienter Algorithmus erhalten werden, der eine komplexe, quantitative Bewertung mit besonders geringer Rechenkapazität ermöglicht.

In einer Ausführungsform ist die Überwachungseinrichtung so konfiguriert, dass das Gleichungssystem oder der Algorithmus durch eine Eingabe der berechneten Kennwerte das Überwachungsergebnis ausgeben. Eine besonders effiziente Überwachung, die vergleichsweise wenig Rechenkapazität verlangt, wird so möglich.

In einer Ausführungsform ist das Überwachungsergebnis ein Ähnlichkeitswert, der die Ähnlichkeit des gemessenen Zustands zum Soll-Profil beschreibt, vorzugsweise als Prozentzahl. Verglichen mit einer herkömmlichen Schwellwertüberwachung von Messwerten ermöglicht die Bewertung der Überwachung mit dem Ergebnis eines Ähnlichkeitswertes eine besonders differenzierte Auswertung des Zustands des Speisenzubereitungsvorgangs eines Rezeptschrittes. Je nach dem, wie wichtig der jeweilige Rezeptschritt für das letztendliche Kochergebnis und dessen Reproduzierbarkeit und Qualität ist, kann eine größere oder geringere Ähnlichkeit zugelassen werden. Beispielsweise ist ein Kochschritt, in dem eine Gewürzmischung vorgemischt wird, weniger relevant für das Kochergebnis als das Erhitzen und Zerkleinern im oberen Temperaturbereich, bei dem sich entscheidet, ob die Speise zu weich oder zu hart oder zu grob oder zu fein geworden sind. Im letzteren Fall kann somit beispielsweise eine höhere Ähnlichkeit zum gewünschten Zustand im Rahmen der Überwachung verlangt werden. Eine entsprechende Festlegung der verlangten Ähnlichkeit kann durch das Vorsehen der Herausgabe eines Ähnlichkeitswertes in Form einer Zahl, insbesondere zwischen Null und Eins, sehr einfach realisiert werden.

In einer Ausgestaltung ist eine Überwachungsschwelle für das Überwachungsergebnis vorgesehen und/oder die Überwachungseinrichtung ist so konfiguriert, dass bei Unterschreiten oder Überschreiten der Überwachungsschwelle durch das Überwachungsergebnis die Aktion initiiert wird. Durch die daraus gewonnene Möglichkeit des Anpassens der Überwachung in Abhängigkeit von der Relevanz jedes einzelnen Rezeptschrittes wird die Toleranz der Überwachung für weniger relevante Abweichungen vergrößert und das unnötige Initiieren von Aktionen vermieden.

In einer Ausführungsform ist eine Überwachungsschwelle für den Ähnlichkeitswert vorgesehen und die Überwachungseinrichtung ist so konfiguriert, dass bei Unterschreiten der Überwachungsschwelle durch den Ähnlichkeitswert die Aktion initiiert wird. Der Ähnlichkeitswert indiziert bei einem geringen Zahlenwert eine geringe Ähnlichkeit zum gewünschten Zustand und bei einem hohen Zahlenwert eine große Ähnlichkeit zum gewünschten Zustand. Eine geringe Ähnlichkeit bedeutet eine große Abweichung und eine große Ähnlichkeit entsprechend eine geringe Abweichung vom gewünschten Zustand. Eine besonders tolerantes und dennoch zuverlässiges Überwachungssystem kann so zur Erzielung eines qualitativ hochwertigen Kochergebnisses erhalten werden, insbesondere mit einer Falsch-Positiv-Rate von <0.1 % und/oder einer Falsch-Negativ-Rate von <1%. Falsch-Positiv meint, dass eine Aktion initiiert wird, obwohl der überwachte Speisenzubereitungsvorgang wie gewünscht abläuft. Falsch-Negativ meint, dass keine Aktion initiiert wird, obwohl der überwachte Speisenzubereitungsvorgang nicht wie gewünscht abläuft.

Der Ähnlichkeitswert ist ein Maß für die Abweichung von dem gewünschten Ergebnis. Das gewünschte Ergebnis kann sich auf einen Zustand einer Speise in dem Speisenzubereitungsgefäß beziehen. Das gewünschten Ergebnis kann sich aber auch auf das Ergebnis beziehen, dass aus einem Rezeptschritt resultiert. Durch die Gewichtungsfaktoren können die einzelnen Charakteristiken gemäß der Vielzahl der Kennwerte rezeptabhängig oder rezeptschrittabhängig unterschiedlich gewichtet mit unterschiedlichem Einfluss in die Ermittlung des Ähnlichkeitswertes eingehen.

In einer Ausführungsform ist ein Sensor zur Messung nur einer Messgröße eingerichtet wie zum Beispiel einer Temperatur. Eine Messung nur einer Messgröße beinhaltet grundsätzlich mehrere Messwerte. Vorzugsweise handelt es sich bei den Messwerten um unmittelbar aufeinander folgende, separate Messsignale, die von dem Sensor an die Überwachungseinrichtung oder die Steuerungseinheit übermittelt werden.

In einer Ausgestaltung ist der Sensor ein Temperatursensor zum Messen einer Temperatur. Gemessen wird also zum Beispiel die Temperatur des Speisenzubereitungsgefäßes und/oder die Temperatur der Speise in dem Speisenzubereitungsgefäß. In einer Ausgestaltung ist der Sensor ein Gewichtssensor zum Messen eines Gewichts, also zum Beispiel das Gewicht eines Teils der Küchenmaschine und/oder des Speisenzubereitungsgefäßes. Das Speisenzubereitungsgefäß kann durch ein oder mehrere Stützelemente der Küchenmaschine abgestützt sein. Ein oder mehrere Stützelemente können mit einem Gewichtssensor so gekoppelt sein dass aus einem dann gemessenen Gewicht das Gewicht der Speise in dem Speisenzubereitungsgefäß berechnet werden kann. In einer Ausgestaltung ist der Sensor ein Stromsensor zum Messen einer Stromstärke, mit der ein Motor ein Mix-Werkzeugs zum Zerkleinern und/oder Mischen betreibt. In einer Ausgestaltung ist der Sensor ein Sensor zum Erfassen der Drehzahl, insbesondere der Ist-Drehzahl oder Ziel-Drehzahl, oder des Drehmoments des Mix-Werkzeugs. In einer Ausgestaltung ist der Sensor ein Sensor zum Messen einer elektrischen Leistung, mit der ein Heizelement zum Erhitzen betrieben wird. Die Sensoren für die Stromstärke und elektrische Leistung können auch Teil der Steuerungseinrichtung sein. Es kann ferner einen Sensor für ein Messen einer Lautstärke, einer Unwucht oder eines Druckes eingesetzt sein. Es kann ein optischer Sensor eingesetzt sein. Es kann ein Sensor für eine Bilderkennung eingesetzt sein. Grundsätzlich können auch Geoinformationen und Volumen berücksichtigt werden.

In einer Ausführungsform beinhaltet die Messung des Sensors, auf dessen Basis die Vielzahl der Kennwerte berechnet wird, mehrere zeitaufgelöste Messwerte der Zustandsmessgröße. Durch einen Sensor werden also Messwerte zeitaufgelöst gemessen, aus denen mehrere Kennwerte berechnet werden. Über ein Zeitfenster zeitaufgelöst gemessene Messwerte einer Messgröße können durch eine Messkurve dargestellt werden. Aus einer Messkurve können Kennwerte vorzugsweise durch das Bilden eines Integrals, eines Medians, eines MADs oder einer Ableitung erhalten werden.

In einer Ausführungsform ist die Überwachungseinrichtung so konfiguriert, dass die Überwachung während des Speisenzubereitungsvorgangs zu einem rezeptabhängigen Analysezeitpunkt erfolgt. Zum Analysezeitpunkt können dann beispielsweise zwei unterschiedliche Messgrößen wie Gewicht und Temperatur gemessen werden. In einer Ausführungsform ist die Überwachungseinrichtung so konfiguriert, dass die Überwachung ab einem rezeptabhängigen Analysezeitpunkt und/oder innerhalb eines rezeptabhängigen Zeitfensters erfolgt. Rechenkapazität kann so auf der einen Seite eingespart werden, die auf der anderen Seite zur Berechnung von einer größeren Anzahl von Kennwerten oder parallelen Überwachungen mit mehreren Soll-Profilen eingesetzt werden kann. Mit geringem technischen Aufwand kann ein sehr gutes Zubereitungsergebnis so sichergestellt werden.

In einer Ausgestaltung wird die Messung in einem Zeitfenster durchgeführt, dass mit dem Beginn eines Rezeptes oder eines Rezeptschrittes startet und/oder zu einem Endzeitpunkt vor einem Ende des Rezeptes oder des Rezeptschrittes endet. Der Start des Zeitfensters unmittelbar ab dem Beginn des Rezeptes oder des Rezeptschrittes hat den Vorteil, dass ein Messkurvenverlauf von Anfang an erhalten wird, der die Berechnung von besonders aussagekräftigen Kennwerten ermöglicht. In diesem Fall erfolgt das Messen der mindestens einen Messgröße wie zum Beispiel der Motorstrom, nachdem ein Speisenzubereitungsvorgang durch die Auswahl eines Rezeptes oder ein Rezeptschritt durch Betätigung einer Benutzerschnittstelle gestartet wurde. Die für dieses Rezept oder diesen Rezeptschritt festgelegten Kennwerte werden dann aus den Messwerten z.B. durch mathematische Operationen und/oder einer Referenzkurvenanpassung berechnet, bis die Vielzahl der Kennwerte vorliegen.

Das Festlegen des Endes des Zeitfensters mit einem Endzeitpunkt vor einem Ende eines Rezeptes oder eines Rezeptschrittes spart Rechenkapazität ein im Vergleich zu einer permanenten Überwachung. Dennoch ist es auch bei dieser Ausführungsform möglich, ein sehr gutes Zubereitungsergebnis sicherzustellen. Zudem können Abweichungen durch ein frühzeitiges Auswerten noch erkannt werden, wenn die Abweichungen noch nicht ein unerwünschtes Kochergebnis bewirken konnten. Ein Kochvorgang kann somit noch "gerettet" werden, selbst wenn Abweichungen beispielsweise der Zutaten bereits vorliegen, jedoch noch möglicherweise durch ein Eingreifen in den Kochvorgang noch kompensiert werden können. Hierzu wird später genauer im Zusammenhang mit der Aktion eingegangen, die durch die Überwachungseinrichtung initiiert werden kann.

In einer Ausgestaltung startet das für ein Messen vorgesehene Zeitfenster zeitlich versetzt nach dem Beginn des Rezeptes oder des Rezeptschrittes. Rechenkapazität kann so gespart werden, ohne dass sich dies nachteilhaft auf das Ergebnis einer Zubereitung einer Speise oder eines Getränks auswirken würde.

In einer Ausgestaltung ist ein Zeitfenster von weniger als 10 oder 20 Sekunden für ein Messen vorgesehen. Durch ein kurzes Zeitfenster im oben genannten Bereich kann eine Berechnung von Kennwerten erfolgen, die von einer Veränderung des Zustands über die Zeit abhängen, z.B. Ableitung, Integral, MAD, Median oder Mittelwert. Gleichzeitig kann Rechenkapazität gespart werden, ohne dass sich dies nachteilhaft auf das Ergebnis einer Zubereitung auswirken würde. Vorzugsweise erstreckt sich das Zeitfenster in Abhängigkeit von einem definierten Analysezeitpunkt. Das Zeitfenster beginnt mit einer Zeitdifferenz vor dem Analysezeitpunkt, der der Hälfte des Zeitfensters entspricht, und ende mit einer Zeitdifferenz nach dem Analysezeitpunkt, der der anderen Hälfte des Zeitfensters entspricht.

In einer Ausgestaltung ist ein Zeitfenster temperaturabhängig. Dies erlaubt das Berechnen von besonders aussagekräftigen Kennwerten. Bevorzugt erstreckt sich das Zeitfenster dann über einen Zeitraum, in der sich die Temperatur um weniger als 10°C oder 20°C ändert. Vorzugsweise erstreckt sich das Zeitfenster in Abhängigkeit von einer definierten Analysetemperatur. Das Zeitfenster beginnt dann bei einer Differenz von 5°C oder 10°C zur Analysetemperatur und/oder endet nach Erreichen der Analysetemperatur bei einer Differenz von 5°C oder 10°C zur Analysetemperatur. Dies ist insbesondere bei einem Rezept oder Rezeptschritt vorteilhaft, bei dem die Temperatur stetig ansteigt.

In einer Ausgestaltung ist die Analysetemperatur ein definierter Temperaturwert zwischen 100°C und 120°C, bevorzugt ungefähr 110°C. Besonders hilfreiche Kennwerte können so berechnet werden. Bevorzugt werden die Analysetemperatur und/oder das Temperaturfenster für jedes Rezept oder jeden Rezeptschritt individuell festgelegt, um weiter verbessert ein sehr gutes Ergebnis sicherzustellen. In einer Ausgestaltung wird die Messung in einem Zeitfenster durchgeführt, dass mit dem Beginn eines Rezeptes oder eines Rezeptschrittes startet und endet, wenn die Analysetemperatur erreicht wird. Das Erreichen der Analysetemperatur definiert dann den Endzeitpunkt vor einem Ende des Rezeptes oder des Rezeptschrittes.

In einer Ausgestaltung liegt der Analysezeitpunkt zwischen 30 Sekunden und 60 Sekunden, bevorzugt ungefähr 50 Sekunden, nach dem Start eines Rezepts oder eines Rezeptschrittes. Besonders aussagekräftige Kennwerte können so berechnet werden. Bevorzugt werden der Analysezeitpunkt und/oder das Zeitfenster für jedes Rezept oder jeden Rezeptschritt individuell festgelegt, um weiter verbessert ein sehr gutes Ergebnis sicherzustellen. In einer Ausgestaltung wird die Messung in einem Zeitfenster durchgeführt, dass mit dem Beginn eines Rezeptes oder eines Rezeptschrittes startet und endet, wenn der Analysezeitpunkt erreicht wird.

In einer Ausgestaltung ist der Sensor ein Sensor für eine Messgröße, aus dessen Messwerten ein mechanischer Zustand der Küchenmaschine ermittelt werden kann. Insbesondere ist die Messgröße der Motorstrom für den Betrieb des Motors des Mix-Werkzeugs. Alternativ oder ergänzend zum Motorstrom ist auch das Drehmoment als Messgröße in einer Ausgestaltung vorgesehen. Alternativ oder ergänzend kann auch eine Drehzahl, z.B. eine Ziel-Drehzahl oder Ist-Drehzahl, berücksichtigt werden. Aus der Messung des Motorstroms und/oder der Drehzahl kann bzw. können der Widerstand der Speise beim Zerkleinern und/oder Mischen der Speise ermittelt werden. Bevorzugt ist bei einem Rezept oder Rezeptschritt mit einer viskosen Speise eine Ermittlung der Viskosität der Speise möglich. Aber auch beim Zerkleinern harter Speisenbestandteile wie Eiswürfel ist dies von Vorteil, um z.B. ein Stumpf-werden der Schneide des Mix-Werkzeugs zu vermeiden, was sich ebenfalls auf die Qualität des Kochergebnisses auswirkt. Ferner kann durch das Messen von Motorstrom und/oder der Drehzahl beispielsweise anhand eines Ähnlichkeitswertes detektiert werden, ob statt Zwiebeln der Benutzer Möhren zugeführt hat. Eine Überwachung zu einem rezeptabhängigen oder rezeptschrittabhängigen Analysezeitpunkt insbesondere mit einem kurzen Zeitfenster ermöglicht in den genannten exemplarischen Fällen eine zuverlässige Überwachung und hohe Qualität.

In einer Ausgestaltung ist vorgesehen, dass mehrere definierte Analysezeitpunkte oder Analysetemperaturen vorgesehen sind, bevorzugt mindestens zwei und/oder höchstens zehn während eines Rezeptes oder Rezeptschrittes. Ein sehr gutes Ergebnis einer Zubereitung kann so weiter verbessert sichergestellt werden.

In einer Ausführungsform sind mehrere Sensoren zur Messung jeweils einer Messgröße eingerichtet und die Messung der Sensoren beinhaltet jeweils wenigstens einen Messwert pro Messgröße, d.h., jeder Sensor misst mindestens einmal. Die Vielzahl der Kennwerte wird auf Basis der Messungen von mehreren Messgrößen berechnet. Dies ermöglicht das Berechnen von besonders charakteristischen Kennwerten, die beispielsweise Aussagen über die Wärmleitfähigkeit einer Speise erlauben. Weiter verbessert kann so ein sehr gutes Ergebnis einer Zubereitung sichergestellt werden.

In einer Ausgestaltung wird ein Kennwert berechnet, der mit der Wärmeleitfähigkeit der Speise in dem Speisenzubereitungsgefäß korreliert. Die Sensoren dazu sind ein Gewichtssensor und ein Sensor zum Messen der elektrischen Leistung, mit der ein Heizelement betrieben wird. Der Gewichtssensor zum Messen eines Gewichts erlaubt in einer Ausgestaltung ein Ermitteln des Gewichts einer Speise oder Zutaten einer Speise in dem Speisenzubereitungsgefäß. Entsprechendes gilt immer auch im Fall einer Zubereitung eines Getränks. Der Sensor zum Messen der elektrischen Leistung für das Heizelement erlaubt in einer Ausgestaltung das Ermitteln des Wärmeeintrags in die Speise in dem Speisenzubereitungsgefäß. Da der Wärmeeintrag gleich dem Produkt aus Masse, Änderung der Temperatur und spezifischer Wärmekapazität ist, kann auf diese Weise besonders einfach die Wärmekapazität der Speise in dem Speisenzubereitungsgefäß als ein Kennwert berechnet werden. Da beispielsweise typische Bestandteile wie Wasser und Öl regelmäßig sehr unterschiedliche spezifische Wärmekapazitäten aufweisen, ist die Wärmekapazität besonders geeignet, um sehr gute Zubereitungsergebnisse sicherstellen zu können.

In einer Ausgestaltung werden zunächst unabhängig voneinander mindestens zwei Sensoren eingesetzt, um parallel jeweils eine Messgröße zu messen, daraus eine Vielzahl von Kennwerten zu ermitteln und daraus mithilfe eines Soll-Profil einen Ähnlichkeitswert zu erhalten. Auf diese Weise werden mindestens zwei unabhängige Ähnlichkeitswerte ermittelt, die anschließend miteinander logisch kombiniert werden. Bevorzugt wird der daraus resultierende Wert weiterverarbeitet, so z.B. durch Mittelwertbildung, Maximum- oder Minimumbildung. In Abhängigkeit von einem Schwellwertvergleich kann eine Aktion initiiert werden. Bevorzugt wird als ein erster Sensor ein Gewichtssensor und parallel dazu als ein zweiter Sensor ein Temperatursensor eingesetzt, um einen ersten Ähnlichkeitswert aus der Temperatur und einen zweiten Ähnlichkeitswert aus dem Gewicht zu erhalten. Aus dem ermittelten thermischen Ähnlichkeitswert und mechanischen Ähnlichkeitswert wird ein Wert berechnet, der für die weitere Überwachung weiterverarbeitet und ausgewertet wird. Es können bei Vorhandensein von zwei unterschiedlichen Sensoren vorteilhaft beispielsweise für ein erstes Rezept nur ein thermisches Verhalten und bei einem zweiten Rezept eine Kombination aus einem thermischen und mechanischen Verhalten verwendet werden. In einer Ausgestaltung können die Vielzahl der Kennwerte, ein Soll-Profil und/oder eine Überwachungsschwelle so eingerichtet sein, dass eine Berücksichtigung einer definierten Zutat bei der Überwachung erfolgt. Insbesondere ist die definierte Zutat erwünscht. Alternativ oder ergänzend ist die definierte Zutat nicht erwünscht. Ein qualitativ besonders hochwertiges Kochergebnis kann so erzielt werden.

In einer Ausgestaltung sind ein Temperatursensor und ein Sensor zum Messen der elektrischen Leistung für ein Heizelement vorgesehen, die jeweils mindestens einen Messwert zu einem definierten Analysezeitpunkt messen. Für bestimmte Speisen, Zutaten und Zutatengemische resultiert hieraus ein charakteristischer Temperaturverlauf in Abhängigkeit von dem Wärmeeintrag, d.h. Energieeintrag. Abweichungen bei den Bestandteilen des Zutatengemisches führen so zu unterschiedlichen Temperaturverläufen. Durch das Messen eines Wertepaares von Temperatur und Wärmeeintrag können so anhand von hinterlegten Kurven oder einer hinterlegten Look-up-Tabelle für das jeweilige Rezept oder den jeweiligen Rezeptschritt durch nur eine punktuelle Messung ein oder mehrere aussagekräftige Kennwerte erhalten werden, die besonders effektiv eine Überwachung mithilfe eines Soll-Profils zur Identifizierung einer Abweichung, z.B. Essig, Öl oder Sojasoße statt Wasser, erlauben. Dies führt dann zu einem geringen Ähnlichkeitswert beispielsweise unterhalb einer Überwachungsschwelle. Wenn Essig, Öl oder Sojasoße statt Wasser verwendet wird, ist der Ähnlichkeitswert unterhalb der Überwachungsschwelle oder z.B. <10%. Obwohl es den Rechenaufwand erhöhen würde, ist es grundsätzlich in einer Ausgestaltung möglich, die Überwachung zusätzlich für typische Abwandlungen des Benutzers bei der Umsetzung eines Rezeptes oder Rezeptschrittes zu implementieren, z.B. Essig, Öl oder Sojasoße statt Wasser, und den daraus erhaltenen Ähnlichkeitswert invertiert zusammen mit mindestens einem weiteren Ähnlichkeitswert auszuwerten.

In einer Ausgestaltung ist die Aktion, die in Abhängigkeit von dem Überwachungsergebnis initiiert wird, ein Ausgeben eines Hinweises an den Benutzer z.B. über ein Display, das automatische Ändern eines Kochparameters, ein automatisches Ändern des Rezeptes, des Rezeptschrittes, des folgenden Rezeptschrittes oder der Rezeptführung oder ein Abbruch des Speisenzubereitungsvorgangs. In einer Ausgestaltung kann der Hinweis eine Informationen oder Ausgabe der Überwachung oder des Überwachungsergebnisses sein oder eine Anweisung an den Benutzer zum Eingriff in den Speisenzubereitungsvorgang beinhalten. Kochparameter sind insbesondere die Ziel-Temperatur des Heizelements, die elektrische Leistung für das Heizelement, der Strom für den Motor des Mix-Werkzeugs, die Ziel-Drehzahl oder das Ziel-Drehmoment des Mix-Werkzeugs. Besonders bevorzugt ist der Abbruch als Aktion, weil hierdurch ein schlechtes Kochergebnis, das gegen die "Geling-Garantie" verstoßen würde, verhindert werden kann. Es liegt hier die Erkenntnis zugrunde, dass ein schlecht schmeckendes Essen für einen Benutzer negativer ist als der Abbruch des Speisenzubereitungsvorgang bzw. Kochvorgangs.

In einer Ausgestaltung ist die Überwachungseinrichtung so konfiguriert, dass die Überwachung erst ab einer Mindesttemperatur von 100°C, bevorzugt 110°C, besonders bevorzugt 120°C erfolgt. Ab der Mindesttemperatur haben die Speisenzubereitungsvorgänge und etwaige Abweichungen einen besonders großen Einfluss auf die Reproduzierbarkeit und die Qualität des Kochergebnisses im Vergleich zu Temperaturbereichen unterhalb der Mindesttemperatur. Hier erhält der Benutzer bevorzugt keine manuelle Eingriffsmöglichkeit auf den automatisch ablaufenden Vorgang mit Ausnahme des Abbruchs des Kochvorgangs. Insbesondere kann der Benutzer eine Ziel-Temperatur nur bis zur Mindesttemperatur einstellen, und/oder eine Ziel-Temperatur oberhalb der Mindesttemperatur kann nur automatisch durch das vom Benutzer ausgewählte Rezept oder den durch den Benutzer aktivierten Rezeptschritt veranlasst werden. Durch das Festlegen einer Mindesttemperatur für die Überwachung kann auf der einen Seite Rechenkapazität, die weniger wirkungsvoll in niedrigeren Temperaturbereichen eingesetzt würde, in eine Ausweitung der Überwachung oberhalb der Mindesttemperatur verlagert werden. Eine sehr effektive und wirkungsvolle Überwachung kann so erhalten werden. Gleichzeitig kann durch das Festlegen einer Mindesttemperatur, ab der ein Benutzer keine manuelle Eingriffsmöglichkeit außer dem Abbruch des Kochvorgangs erhält, durch eine initiierte Aktion der Überwachung korrigierend auf den Speisenzubereitungsvorgang oberhalb der Mindesttemperatur eingewirkt werden. Dies kann für ein verbessertes Kochergebnis sorgen.

Ein weiterer Aspekt der Erfindung betrifft ein Verfahren zum Überwachen eines Speisenzubereitungsvorgangs, das mithilfe der erfindungsgemässen Küchenmaschine zum Erhitzen,

Zerkleinern und/oder Mischen einer Speise in einem Speisenzubereitungsgefäß durchgeführt wird. Der Zustand der Küchenmaschine und/oder der Speise werden gemessen, auf Basis des gemessenen Zustands wird ein Überwachungsergebnis ermittelt und in Abhängigkeit von dem Überwachungsergebnis eine Aktion initiiert. Eine Temperatur des Speisenzubereitungsgefäßes wird erfasst. Die Überwachung erfolgt in Abhängigkeit von einem Rezept zur Zubereitung einer Speise erst ab einer Mindesttemperatur von insbesondere 100°C, bevorzugt 110°C, besonders bevorzugt 120°C. Die hieraus entstehenden Vorteile sowie weitere Ausführungsformen dieses Aspekts der Erfindung gehen aus der obigen Beschreibung zum vorhergehenden Aspekt der Erfindung hervor, die auch für dieses Verfahren gilt.

Nachfolgend werden Ausführungsbeispiele der Erfindung auch anhand von Figuren näher erläutert. Die beanspruchten Schutzbereiche sind nicht auf die Ausführungsbeispiele beschränkt.

Es zeigen:
- Figur 1:: Schematische Darstellung einer Küchenmaschine;
- Figur 2a bis 2c:: Schematische Illustration des Erhalts von Kenngrößen.
- Figur 3:: Schematische Illustration einer Trainingsphase eines Soll-Profils.
- Figur 4:: Schematische Illustration eines Einsatzes des Soll-Profils der Fig. 3 zur Überwachung eines Speisenzubereitungsvorgangs eines Rezeptschritts mit der Vielzahl der Kenngrößen aus einer der Fig. 2a bis 2c.

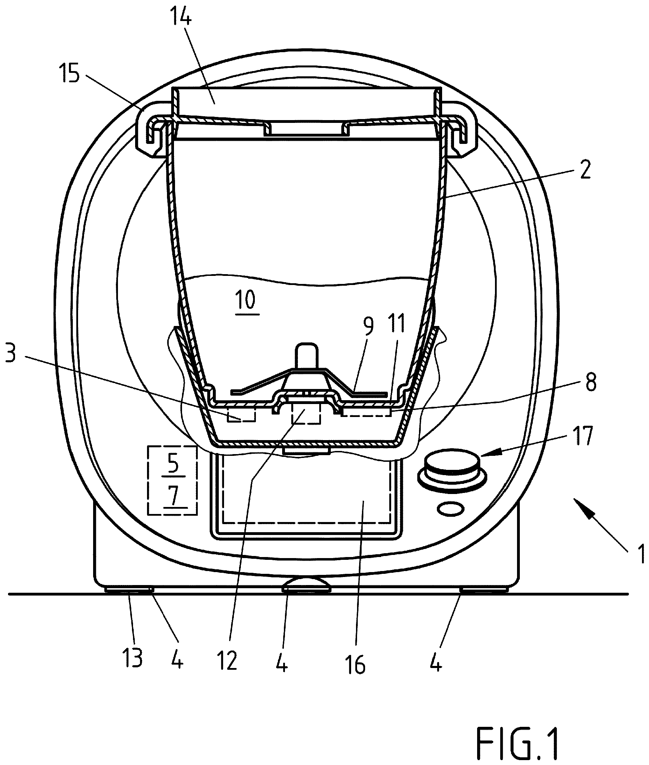

Die Figur 1 zeigt eine Küchenmaschine 1 mit einem Heizelement 8 zum Erhitzen und einem Mix-Werkzeug 9 zum Zerkleinern und/oder Mischen einer Speise 10 in einem Speisenzubereitungsgefäß 2. Das Heizelement 8 und ein Temperatursensor 3 sind im Bereich des Bodens 11 des Speisenzubereitungsgefäßes 2 integriert. Ein Motor 12 treibt das Mix-Werkzeug 9 mit einem Drehmoment und einer Drehzahl an, die von dem Motorstrom zum Betreiben des Motors 12 abhängt. Gewichtssensoren 4 sind im Bereich von Stützelementen 13 so angebracht, dass das gemessene Gewicht mit der Speise 10 in dem Speisenzubereitungsgefäß 2 korreliert. Das Speisenzubereitungsgefäß 2 kann mithilfe eines Deckels 14 geschlossen werden, der über ein Verriegelungsmittel 15 an dem Speisenzubereitungsgefäß 2 fixiert werden kann. Die Benutzerschnittstelle der Küchenmaschine umfasst ein Display 16 zum Anzeigen eines Hinweises und ein Betätigungselement 17 zum Betätigen der Benutzerschnittstelle durch den Benutzer. Die Küchenmaschine 1 umfasst eine Steuerungseinheit 7 und eine Überwachungseinheit 5, die in einer Ausgestaltung Teil einer gemeinsamen Einrichtung mit mindestens einem Prozessor und einem Speicher sind, wobei ein Programmcode mit Befehlen auf dem Speicher gespeichert werden kann, dessen Befehle die Steuerungseinheit und/oder die Überwachungseinrichtung dazu veranlassen, Verfahrensschritte auszuführen. Die Steuereinheit 7 kann auf eine Vielzahl von Rezepten mit jeweils mehreren zumindest teilautomatisierten Rezeptschritten zugreifen oder hat Rezepte im Speicher gespeichert. Auf Basis eines Rezeptes oder Rezeptschrittes kann die Steuerungseinheit 7 die Küchenmaschine 1 steuern, z.B. das Heizelement 8, den Motor 12 oder das Display 16.

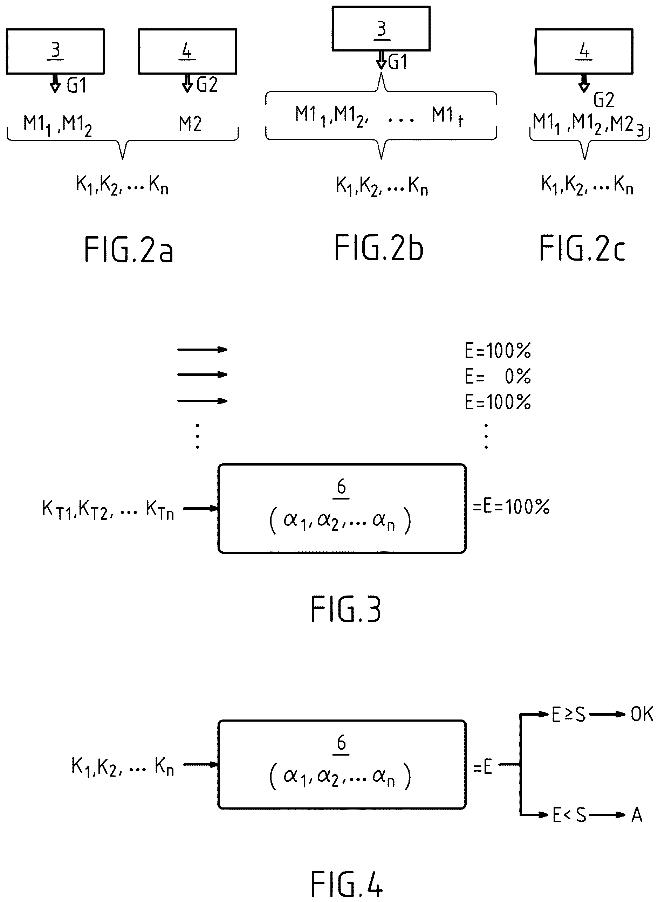

Wie die Figuren 2a bis 2c illustrieren, ermittelt die Überwachungseinrichtung 5 eine Messgröße G1, z.B. eine Temperatur, die durch den Temperatursensor 3 gemessen wird. Die Überwachungseinrichtung 5 ermittelt ferner eine Messgröße G2, z.B. ein Gewicht, das durch den Gewichtssensor 4 gemessen wird. Die beiden Messgrößen beschreiben die Eigenschaft der Speise 10 in dem Speisenzubereitungsgefäß 2 in Bezug auf die Temperatur und dem Gewichts während der Durchführung eines Rezeptschrittes. Die Figur 2a zeigt eine Ausgestaltung, in der zwei unterschiedliche Sensoren 3, 4 zum Erfassen unterschiedlicher Messgrößen G1, G2 vorgesehen sind. Zum rezeptschrittabhängigen Analysezeitpunkt misst der erste Sensor 3 zwei Messwerte M1₁, M1₂ der Messgröße G1 (Temperatur) und der zweite Sensor 4 misst nur einen Messwert M2 der Messgröße G2 (Gewicht). Die Überwachungseinrichtung 5 berechnet aus den gemessenen Messwerten M1₁, M1₂, M2 gemeinsam die Vielzahl der Kennwerte K₁, K₂, ... Kₙ, wobei n die Anzahl der Kennwerte ist. Die Figur 2b zeigt eine Ausgestaltung, in der ein Sensor 3 mehrere Messwerte M1₁, M1₂, ... M1ₜ einer Messgröße G1 (Temperatur) zeitaufgelöst innerhalb eines rezeptschrittabhängigen Zeitfensters misst. Die zeitaufgelösten Messwerte M1₁, M1₂, ... M1ₜ mit einer Anzahl t Messwerte werden dann als Ganzes herangezogen, um daraus die Vielzahlt der Kennwerte K₁, K₂, ... Kₙ, zu berechnen. Dabei entspricht K₁ z.B. dem Median und K₂ z.B. dem MAD des zeitaufgelösten Kurvenverlaufs der Messwerte M1₁, M1₂, ... M1ₜ. Es wird dabei stets der gesamte Kurvenverlauf als Ganzes für die Berechnung der Vielzahl der Kennwerte K₁, K₂, ... Kₙ, genutzt. Eine Aufteilung der Kurve oder der Messwerte M1₁, M1₂, ... M1ₜ in separate Bereiche oder ähnliches erfolgt nicht. Die Figur 2c zeigt eine Ausgestaltung, in der nur eine einstellige Anzahl von Messwerten M2₁, M2₂, M2₃ der Messgröße G2 (Gewicht) durch den Gewichtssensor 4 gemessen wird. Aus diesen Messwerten M2_{1,} M2₂, M2₃ werden anschließend die Vielzahlt der Kennwerte K₁, K₂, ... Kₙ berechnet. Insbesondere ist die Berechnung der Vielzahlt der Kennwerte K₁, K₂, ... Kₙ im Einsatz beim Endverbraucher wie in Fig. 4 illustriert identisch mit der Berechnungsweise der jeweiligen Kennwerte K_{T1}, K_{T2}, ... K_{Tn} in einer Trainingsphase, die in Fig. 3 illustriert wird.

Die Figur 3 zeigt eine Trainingsphase zum Generieren des Soll-Profils 6. Eine Vielzahl von Gewichtungsfaktoren α₁, α₂, ... αₙ zur Gewichtung der Kennwerte K_{T1}, K_{T2}, ... K_{Tn} werden in der Trainingsphase ermittelt und im Anschluss an die Trainingsphase für den späteren Einsatz festgelegt. Zum Ermitteln der Gewichtungsfaktoren α₁, α₂, ... αₙ werden eine Reihe von Speisenzubereitungsvorgängen eines Rezeptschrittes durchgeführt, für den das Soll-Profil 6 erstellt wird. Dabei werden einerseits Abwandlungen und Abweichungen hinsichtlich der Zutaten oder der Beschaffenheit der Zutaten vorgenommen, die dennoch zu einem akzeptablen Kochergebnis (E=100%) führen und andererseits solche Abwandlungen und Abweichungen, die zu keinem akzeptablen Kochergebnis führen (Ähnlichkeitswert E=0%). Aus jeder dieser Speisenzubereitungsvorgänge wird eine Vielzahl von Trainings-Kennwerten K_{T1}, K_{T2}, ... K_{Tn} berechnet und gemeinsam mit dem Überwachungsergebnis in Form eines vorgegebenen Ähnlichkeitswertes E dem Soll-Profil 6 zugeführt. Auf diese Weise ist der der Ähnlichkeitswert E nicht wie im späteren Einsatz variabel. Die noch nicht festgelegten Gewichtungsfaktoren α₁, α₂, ... αₙ, können auf diese Weise so ermittelt werden, dass das Soll-Profil 6 das Verhalten während des Speisenzubereitungsvorgangs des betreffenden Rezeptschrittes abbildet.

Die Figur 4 illustriert den Ablauf der Überwachung unter Einsatz des auf die oben beschriebene Weise erhaltenen Soll-Profils 6. Während der Durchführung eines Speisenzubereitungsvorgangs werden wie in den Fig. 2a bis 2c illustriert die Vielzahl der Kennwerte K₁, K₂, ... Kₙ für einen bestimmten Rezeptschritt berechnet und dem Soll-Profil 6 für diesen Rezeptschritt als Eingangswerte zugeführt. Mithilfe des Soll-Profils 6, dessen Gewichtungsfaktoren α₁, α₂, ... αₙ für die jeweiligen Kennwerte K₁, K₂, ... Kₙ das Verhalten für diesen Rezeptschritt abbilden, kann mit der Vielzahl der Kennwerte K₁, K₂, ... Kₙ der Ähnlichkeitswert E ermittelt werden, der insbesondere eine Zahl zwischen 0 und 1 ist. Der Ähnlichkeitswert beschreibt (insbesondere zum Analysezeitpunkt) die Ähnlichkeit des Zustands der Speise 10 in dem Speisenzubereitungsgefäß 2 mit einem idealen Zustand, der zu einem bestmöglich Kochergebnis führen würde, wobei auch Kochergebnisse in einem gewissen Ähnlichkeitsbereich die festgelegten Anforderungen an eine akzeptable Reproduzierbarkeit und Qualität erfüllen. Die Überwachungseinrichtung 5 initiiert eine Aktion A der Küchenmaschine 1, wenn der Ähnlichkeitswert E eines Rezeptschrittes eine rezeptschrittabhängige Überwachungsschwelle S unterschreitet und damit den als akzeptabel festgelegten Ähnlichkeitsbereich verlässt. Die Aktion A kann ein Hinweis an den Benutzer mit einer Information oder Anweisung und/oder ein Verändern eines Kochparameters sein. Andernfalls, wenn alles "OK" ist, wird keine Aktion initiiert.

## Patentansprüche

1. Küchenmaschine (1) zum Durchführen eines teilautomatisierten Speisenzubereitungsvorgangs zum Herstellen einer Speise aus Zutaten durch Erhitzen, Zerkleinern und/oder Mischen der Speise (10) in einem Speisenzubereitungsgefäß (2) gemäß eines elektronisch gespeicherten Rezeptes mit einer Vielzahl von Rezeptschritten, wobei ein Rezeptschritt der Vielzahl von Rezeptschritte eine Steuerungseinheit (7) dazu veranlassen kann, einem Benutzer einen Hinweis über ein Display der Küchenmaschine (1) anzuzeigen, dass der Benutzer eine Zutat dem Speisenzubereitungsgefäß (2) zuführen soll,
wobei die Küchenmaschine (1) einen Sensor (3, 4) zum Messen eines Zustands der Küchenmaschine (1) oder einer Speise (10) in dem Speisenzubereitungsgefäß (2) sowie eine Überwachungseinrichtung (5) zum Überwachen des gemessenen Zustands umfasst, wobei die Überwachungseinrichtung (5) so konfiguriert ist, dass die Überwachungseinrichtung (5) auf Basis des gemessenen Zustands ein Überwachungsergebnis ermittelt und in Abhängigkeit von dem Überwachungsergebnis eine Aktion (A) initiiert, wobei die Überwachungseinrichtung (5) so konfiguriert ist, dass die Überwachung in Abhängigkeit von dem Rezept zur Zubereitung einer Speise (10) erfolgt, wobei die Überwachungseinrichtung (5) so konfiguriert ist, dass eine Vielzahl von Kennwerten (K1, K2, ... Kn) zur Charakterisierung des Zustands auf Basis der Messung des Sensors (3, 4) berechnet wird, wobei unterschiedliche Kennwerte (K1, K2, ... Kn) aus Messwerten mindestens einer Messgröße berechnet werden, und die Überwachungseinrichtung (5) auf Basis der berechneten Kennwerte (K1, K2, ... Kn) das Überwachungsergebnis ermittelt,
**dadurch gekennzeichnet, dass** die Vielzahl der Kennwerte so eingerichtet ist, dass eine Berücksichtigung einer definierten Zutat bei der Überwachung erfolgt, derart, dass ein Abweichen des Kochvorgangs durch eine falsche Zutat oder eine übermäßig veränderte Beschaffenheit einer Zutat, was verfaulte Tomaten statt frische Tomaten sein können, durch das Überwachungsergebnis quantifiziert wird.

2. Küchenmaschine (1) nach Anspruch 1, **dadurch gekennzeichnet, dass** für jedes Rezept ein eigenes Soll-Profil (6) vorgesehen ist, auf das die Überwachungseinrichtung (5) zum Überwachen des Zustands zugreifen kann.

3. Küchenmaschine (1) nach einem der vorhergehenden Ansprüche, **dadurch gekennzeichnet**, die Küchenmaschine (1) die Steuerungseinheit (7) umfasst, die so konfiguriert ist, dass die Steuerungseinheit (7) auf eine Vielzahl von Rezepten zugreifen kann, das Rezept eine Vielzahl von Rezeptschritten beinhaltet, und/oder auf Basis des Rezepts oder der Rezeptschrittes des Rezeptes den Speisenzubereitungsvorgang für die Speise (10) zumindest teilweise automatisiert steuern kann.

4. Küchenmaschine (1) nach den zwei vorhergehenden Ansprüchen, **dadurch gekennzeichnet, dass** für jeden Rezeptschritt des Rezeptes ein eigenes Soll-Profil (6) vorgesehen ist, auf das die Überwachungseinrichtung (5) zum Überwachen des Zustands zugreifen kann.

5. Küchenmaschine (1) nach den Ansprüchen 2 oder 4, **dadurch gekennzeichnet, dass** das Soll-Profil (6) ein Gleichungssystem oder ein Algorithmus ist.

6. Küchenmaschine (1) nach Anspruch 5, **dadurch gekennzeichnet, dass** das Gleichungssystem oder der Algorithmus Gewichtungsfaktoren (α₁, α₂, ... αₙ) umfasst, die für das jeweilige Rezept oder den jeweiligen Rezeptschritt festgelegt wurden, um ein rezeptabhängiges oder rezeptschrittabhängiges Soll-Profil (6) bereitzustellen.

7. Küchenmaschine (1) nach Anspruch 5, **dadurch gekennzeichnet, dass** in einem Soll-Profil (6) jedem Kennwert (K₁, K₂, ... Kₙ) ein Gewichtungsfaktor (α₁, α₂, ... αₙ) zum Gewichten des Kennwerts (K₁, K₂, ... Kₙ) zugeordnet ist.

8. Küchenmaschine (1) nach Anspruch 5, **dadurch gekennzeichnet, dass** die Überwachungseinrichtung (5) so konfiguriert ist, dass das Gleichungssystem oder der Algorithmus durch eine Eingabe der berechneten Kennwerte (K₁, K₂, ... Kₙ) das Überwachungsergebnis ausgeben.

9. Küchenmaschine (1) nach Anspruch 2 oder 5, **dadurch gekennzeichnet, dass** das Überwachungsergebnis ein Ähnlichkeitswert (E) ist, der die Ähnlichkeit des gemessenen Zustands zum Soll-Profil (6) beschreibt, vorzugsweise als Prozentzahl.

10. Küchenmaschine (1) nach dem vorhergehenden Anspruch, **dadurch gekennzeichnet, dass** eine Überwachungsschwelle (S) für den Ähnlichkeitswert (E) vorgesehen ist und die Überwachungseinrichtung (5) so konfiguriert ist, dass bei Unterschreiten der Überwachungsschwelle (S) durch den Ähnlichkeitswert (E) die Aktion (A) initiiert wird.

11. Küchenmaschine (1) nach einem der vorhergehenden Ansprüche, **dadurch gekennzeichnet, dass** der Sensor (3) zur Messung nur einer Messgröße (G1) eingerichtet ist und die Messung des Sensors (3), auf dessen Basis die Vielzahl der Kennwerte (K₁, K₂, ... Kₙ) berechnet wird, mehrere zeitaufgelöste Messwerte (M1₁, M1₂, ... M1ₜ) der Messgröße (G1) beinhaltet.

12. Küchenmaschine (1) nach einem der vorhergehenden Ansprüche, **dadurch gekennzeichnet, dass** mehrere Sensoren (3, 4) zur Messung jeweils einer Messgröße (G1, G2) eingerichtet sind und die Messung der Sensoren (3, 4) jeweils wenigstens einen Messwert (M1₁, M1₂, M2, M2_{1,} M2₂, M2₃) pro Messgröße (G1, G2) beinhaltet, wobei die Vielzahl der Kennwerte (K₁, K₂, ... Kₙ) auf Basis der Messungen von mehreren Messgrößen (G1, G2) berechnet wird.

13. Küchenmaschine (1) nach einem der vorhergehenden Ansprüche, **dadurch gekennzeichnet, dass** die Überwachungseinrichtung (5) so konfiguriert ist, dass die Überwachung während des Speisenzubereitungsvorgangs zu einem rezeptabhängigen Analysezeitpunkt oder innerhalb eines rezeptabhängigen Zeitfensters erfolgt.

14. Verfahren zum Überwachen eines Speisenzubereitungsvorgangs, der mithilfe der Küchenmaschine (1) gemäß einem der vorhergehenden Ansprüche zum Erhitzen, Zerkleinern und/oder Mischen einer Speise (10) in dem Speisenzubereitungsgefäß (2) durchgeführt wird, wobei der Zustand der Küchenmaschine (1) oder der Speise (10) gemessen, auf Basis des gemessenen Zustands das Überwachungsergebnis ermittelt und in Abhängigkeit von dem Überwachungsergebnis die Aktion (A) initiiert wird, wobei eine Temperatur des Speisenzubereitungsgefäßes (2) erfasst wird und die Überwachung in Abhängigkeit von dem Rezept zur Zubereitung der Speise (10) erst ab einer Mindesttemperatur von 100°C, bevorzugt 110°C, besonders bevorzugt 120°C erfolgt.

## Claims

1. Food processor (1) for performing a partially automated food preparation process for making a food from ingredients by heating, chopping and/or mixing the food (10) in a food preparation vessel (2) according to an elextronically stored recipe having a plurality of recipe steps, wherein a recipe step of the plurality of recipe steps can cause a control unit (7) to display a message to a user on a display of the food processor (1) that the user should add an ingredient to the food preparation vessel (2),
wherein the food processor (1) comprises a sensor (3, 4) for measuring a condition of the food processor (1) or a food (10) in the food preparation vessel (2), and a monitoring device (5) for monitoring the measured condition, wherein the monitoring device (5) is configured such that the monitoring device (5) determines a monitoring result based on the measured condition and initiates an action (A) in dependence of the monitoring result, wherein the monitoring device (5) is configured such that the monitoring takes place in dependence of the recipe for preparing a food (10), wherein the monitoring device (5) is configured such that a plurality of characteristic values (K1, K2, ... Kn) for characterising the condition are calculated based on the measurement of the sensor (3, 4), wherein the plurality of different characteristic values (K1, K2, ... Kn) are calculated from measured values of at least one measured quantity (G1, G2), and the monitoring device (5) determines the monitoring result based on the calculated characteristic values (K1, K2, ... Kn),
**characterized in that** the plurality of characteristic values is configured such that a defined ingredient is taken into account in the monitoring, such that a deviation of the cooking process due to a wrong ingredient or an excessively changed quality of an ingredient, which may be rotten tomatoes instead of fresh tomatoes, is quantified by the monitoring result.

2. Food processor (1) according to claim 1, **characterised in that** for each recipe, a separate desired profile (6) is provided which can be accessed by the monitoring device (5) for monitoring the condition.

3. Food processor (1) according to one of the preceding claims, **characterized in that** the food processor (1) comprises the control unit (7) which is configured such that the control unit (7) can access a plurality of recipes, the recipe includes a plurality of recipe steps, and/or the control unit (7) can control the food preparation process for the food (10) at least partially automatically on the basis of the recipe or the recipe steps of the recipe.

4. Food processor (1) according to the two preceding claims, **characterized in that** for each recipe step of the recipe, a separate desired profile (6) is provided which can be accessed by the monitoring device (5) for monitoring the condition.

5. Food processor (1) according to claims 2 or 4, **characterized in that** the desired profile (6) is a system of equations or an algorithm.

6. Food processor (1) according to claim 5, **characterised in that** the system of equations or the algorithm comprises weighting factors (α₁, α₂, ... αₙ) specified for the respective recipe or recipe step to provide a recipe-dependent or recipe step-dependent desired profile (6).

7. Food processor (1) according to claim 5, **characterized in that** in a desired profile (6), each characteristic value (K₁, K₂, ... Kn) is assigned a weighting factor (α₁, α₂, ... αₙ) for weighting the characteristic value (K₁, K₂, ... Kₙ).

8. Food processor (1) according to claim 5, **characterized in that** the monitoring device (5) is configured such that the system of equations or the algorithm outputs the monitoring result by inputting the calculated characteristic values (K₁, K₂, ... Kₙ).

9. Food processor (1) according to claim 2 or 5, **characterized in that** the monitoring result is a similarity value (E) which describes the similarity of the measured condition to the desired profile (6), preferably as a percentage.

10. Food processor (1) according to the preceding claim, **characterized in that** a monitoring threshold (S) is provided for the similarity value (E) and the monitoring device (5) is configured such that if the similarity value (E) falls below the monitoring threshold (S), the action (A) is initiated.

11. Food processor (1) according to one of the preceding claims, **characterized in that** the sensor (3) is adapted for measuring only one measured quantity (G1) and the measurement of the sensor (3), on the basis of which the plurality of characteristic values (K₁, K₂, ... Kₙ) is calculated, includes several time-resolved measured values (M1₁, M1₂, ... M1ₜ) of the measured quantity (G1).

12. Food processor (1) according to one of the preceding claims, **characterized in that** several sensors (3, 4) are adapted for measuring one measured quantity (G1, G2) each and the measurement of the sensors (3, 4) includes at least one measured value (M1₁, M1₂, M2, M2₁, M2₂, M2₃) per measured quantity (G1, G2), wherein the plurality of characteristic values (K₁, K₂, ... Kₙ) is calculated on the basis of the measurements of several measured quantities (G1, G2)

13. Food processor (1) according to one of the preceding claims, **characterised in that** the monitoring device (5) is configured such that monitoring takes place during the food preparation process at a recipe-dependent analysis time or within a recipe-dependent time window.

14. Method for monitoring a food preparation process which is carried out by means of the food processor (1) according to one of the preceding claims for heating, chopping and/or mixing a food (10) in the food preparation vessel (2), wherein a condition of the food processor (1) or of the food (10) is measured, the monitoring result is determined based on the measured condition and the action (A) is initiated in dependence of the monitoring result, wherein a temperature of the food preparation vessel (2) is detected and the monitoring takes place in dependence of the recipe for preparing the food (10) only from a minimum temperature of 100°C, preferably 110°C, particularly preferably 120°C.

## Revendications

1. Machine de cuisine (1) pour effectuer une opération de préparation de plat partiellement automatisée pour préparer un plat à partir d'ingrédients en chauffant, broyant et/ou mélangeant le plat (10) dans un récipient de préparation de plat (2) selon une recette stockée électroniquement avec une pluralité d'étapes de recette, dans laquelle une étape de recette de la pluralité d'étapes de recette peut amener une unité de commande (7) à afficher une indication à un utilisateur via un affichage de la machine de cuisine (1) que l'utilisateur doit ajouter un ingrédient au récipient de préparation de plat (2),
dans laquelle la machine de cuisine (1) comprend un capteur (3, 4) pour mesurer un état de la machine de cuisine (1) ou d'un plat (10) dans le récipient de préparation de plat (2) et un dispositif de surveillance (5) pour surveiller l'état mesuré, dans laquelle le dispositif de surveillance (5) est configuré de telle sorte que le dispositif de surveillance (5) détermine un résultat de surveillance sur la base de l'état mesuré et initie une action (A) en fonction du résultat de surveillance, dans laquelle le dispositif de surveillance (5) est configuré de telle sorte que la surveillance s'effectue en fonction de la recette pour la préparation d'un plat (10), dans laquelle le dispositif de surveillance (5) est configuré de telle sorte qu'une pluralité de valeurs caractéristiques (K1, K2, .. Kn) pour caractériser l'état est calculée sur la base de la mesure du capteur (3, 4), dans laquelle des différentes valeurs caractéristiques (K1, K2, ... Kn) sont calculées à partir des valeurs de mesure d'au moins une grandeur de mesure, et le dispositif de surveillance (5) détermine sur la base des valeurs caractéristiques le résultat de la surveillance calculées (K1, K2, ... Kn),
**caractérisé en ce que** la pluralité de valeurs caractéristiques est agencée de telle sorte qu'une prise en compte d'un ingrédient défini a lieu lors de la surveillance, de telle sorte qu'une déviation du processus de cuisson par un ingrédient erroné ou une nature excessivement modifiée d'un ingrédient, ce qui peut être des tomates pourries au lieu de tomates fraîches, est quantifiée par le résultat de surveillance.

2. Machine de cuisine (1) selon la revendication 1, **caractérisée en ce qu'**il est prévu pour chaque recette un profil de consigne (6) propre auquel le dispositif de surveillance (5) peut accéder pour surveiller l'état.

3. Machine de cuisine (1) selon l'une quelconque des revendications précédentes, **caractérisée en ce que** la machine de cuisine (1) comprend l'unité de commande (7) configurée de telle sorte que l'unité de commande (7) peut accéder à une pluralité de recettes, la recette comprend une pluralité d'étapes de recette, et/ou peut commander de manière au moins partiellement automatisée le processus de préparation d'aliments pour le plat (10) sur la base de la recette ou des étapes de recette de la recette.

4. Machine de cuisine (1) selon les deux revendications précédentes, **caractérisée en ce qu'**il est prévu pour chaque étape de la recette un profil de consigne (6) propre auquel le dispositif de surveillance (5) peut accéder pour surveiller l'état.

5. Machine de cuisine (1) selon les revendications 2 ou 4, **caractérisée en ce que** le profil de consigne (6) est un système d'équations ou un algorithme.

6. Machine de cuisine (1) selon la revendication 5, **caractérisée en ce que** le système d'équations ou l'algorithme comprend des facteurs de pondération (α1, α2, ... αn) qui étaient déterminés pour la recette ou l'étape de recette respective afin de fournir un profil de consigne (6) dépendant de recette ou dépendant d'étape de recette.

7. Machine de cuisine (1) selon la revendication 5, **caractérisée en ce que** dans un profil de consigne (6), à chaque valeur caractéristique (K1, K2, ... Kn) est associée un facteur de pondération (α1, α2, ... αn) pour pondérer la valeur caractéristique (K1, K2, ... Kn).

8. Machine de cuisine (1) selon la revendication 5, **caractérisée en ce que** le dispositif de surveillance (5) est configuré de telle sorte que le système d'équations ou l'algorithme délivrent le résultat de surveillance par une entrée des valeurs caractéristiques (K1, K2, ... Kn) calculées.

9. Machine de cuisine (1) selon la revendication 2 ou 5, **caractérisée en ce que** le résultat de surveillance est une valeur de similitude (E) qui décrit la similitude de l'état mesuré par rapport au profil de consigne (6), de préférence sous forme de pourcentage.

10. Machine de cuisine (1) selon la revendication précédente, **caractérisée en ce qu'**un seuil de surveillance (5) est prévu pour la valeur de similitude (E) et **en ce que** le dispositif de surveillance (5) est configuré de telle sorte que l'action (A) est initiée lorsque la valeur de similitude (E) passe en dessous du seuil de surveillance (S).

11. Machine de cuisine (1) selon l'une des revendications précédentes, **caractérisée en ce que** le capteur (3) est agencé pour mesurer une seule grandeur de mesure (G1) et la mesure du capteur (3), sur la base de laquelle la pluralité de valeurs caractéristiques (K1, K2, ... Kn) est calculée, comprend plusieurs valeurs de mesure (M11, M12, ... M1t) résolues en temps de la grandeur de mesure (G1).

12. Machine de cuisine (1) selon l'une des revendications précédentes, **caractérisée en ce que** plusieurs capteurs (3, 4) sont agencés respectivement pour la mesure d'une grandeur de mesure (G1, G2) et la mesure des capteurs (3, 4) comprend respectivement au moins une valeur de mesure (M11, M12, M2, M22, M23) par grandeur de mesure (G1, G2), dans laquelle la pluralité des valeurs caractéristiques (K1, K2, ... Kn) est calculée sur la base des mesures de plusieurs grandeurs de mesure (G1, G2).

13. Machine de cuisine (1) selon l'une des revendications précédentes, **caractérisée en ce que** le dispositif de surveillance (5) est configuré de sorte que la surveillance a lieu pendant le processus de préparation des aliments à un moment d'analyse dépendant de la recette ou à l'intérieur d'une fenêtre temporelle dépendant de la recette.

14. Procédé de surveillance d'une opération de préparation d'aliments effectuée à l'aide de la machine de cuisine (1) selon l'une des revendications précédentes pour chauffer, broyer et/ou mélanger un plat (10) dans le récipient de préparation de plat (2), dans lequel l'état de la machine de cuisine (1) ou du plat (10) est mesuré, le résultat de la surveillance est déterminé sur la base de l'état mesuré et l'action (A) est initiée en fonction du résultat de la surveillance, dans lequel une température du récipient de préparation de plat (2) est détectée et la surveillance en fonction de la recette pour la préparation du plat (10) n'est effectuée qu'à partir d'une température minimale de 100°C, de préférence 110°C, de manière particulièrement préférée 120°C.
